(19) Europäisches Patentamt
European Patent Office
Office européen des brevets

(11) EP 4 025 644 B1

(12) # EUROPEAN PATENT SPECIFICATION

(45) Date of publication and mention of the grant of the patent:
**21.02.2024 Bulletin 2024/08**

(21) Application number: **19944547.9**

(22) Date of filing: **05.09.2019**

(51) International Patent Classification (IPC):
***C08K 5/52*** *(2006.01)* ***C08L 71/02*** *(2006.01)*
***C08L 83/06*** *(2006.01)* ***C09D 5/02*** *(2006.01)*
***C09D 7/63*** *(2018.01)*

(52) Cooperative Patent Classification (CPC):
**C08L 71/02; C09D 5/027; C09D 7/63**

(86) International application number:
**PCT/CN2019/104474**

(87) International publication number:
**WO 2021/042311 (11.03.2021 Gazette 2021/10)**

(54) **AQUEOUS POLYMER DISPERSION**

WÄSSRIGE POLYMERDISPERSION

DISPERSION AQUEUSE DE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.07.2022 Bulletin 2022/28**

(73) Proprietors:
- **Dow Global Technologies LLC**
  **Midland, MI 48674 (US)**
- **Rohm and Haas Company**
  **Collegeville, PA 19426 (US)**

(72) Inventors:
- **QIAN, Zhen**
  **Shanghai 201203 (CN)**
- **WANG, Jinfei**
  **Shanghai 201203 (CN)**
- **XU, Jianming**
  **Shanghai 201203 (CN)**
- **ZHANG, Qingwei**
  **Shanghai 201203 (CN)**
- **CUI, Wei**
  **Shanghai 201203 (CN)**

(74) Representative: **Houghton, Mark Phillip**
**Patent Outsourcing Limited**
**1 King Street**
**Bakewell, Derbyshire DE45 1DZ (GB)**

(56) References cited:
**WO-A1-2018/086055**
**WO-A1-2019/056361**
**WO-A1-2019/120183**
**CA-C- 2 630 209**
**CN-A- 106 436 360**
**CN-A- 107 604 697**
**GB-A- 1 045 456**
**US-A1- 2016 355 698**
**US-A1- 2017 145 244**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 025 644 B1

## Description

### FIELD OF THE INVENTION

The present invention relates to an aqueous polymer dispersion and an aqueous coating composition comprising the same.

### INTRODUCTION

Aqueous or waterborne coating compositions are becoming increasingly more important than solvent-based coating compositions for less environmental problems. The coating industry is always interested in developing coating compositions without or with substantially reduced or low VOCs, for example, no greater than 5 grams (g) of VOCs per liter of coating compositions. However, aqueous coating compositions, particularly low VOC coating compositions, usually suffer from a lack of freeze-thaw (F/T) stability during transportation and storage.

Addition of anti-freeze agents having no contribution to VOCs can improve FIT stability of coating compositions, but sometimes hurts stain resistance of the resulting coatings. Stain resistance is coating films' resistance to being wetted by stains such as hydrophilic and hydrophobic stains, resistance to being adhered by stains on the coating films, and how easily stains can be removed from the coating films. As required by some international or national standards for coatings' stain resistance (e.g., GB/T 9780-2013), attempts have been made to achieve a total stain resistance score of 45 for six types of stains, most of which are hydrophilic stains such as ink, vinegar, and black tea. Many common household stains such as pencil, lipstick, and crayon are hydrophobic stains, therefore, there exists a need to improve resistance to these hydrophobic stains. Moreover, surfactants typically included in preparation of binders may have impacts on properties of aqueous coating compositions, for example, brush clogging phenomenon tends to occur when some types of phosphate surfactants are used.

Therefore, there remains a need to develop an aqueous polymer dispersion, particularly suitable for zero or low VOC coating applications, to balance coating performance properties including hydrophobic stain resistance, freeze-thaw stability, and anti-clogging properties.

### SUMMARY OF THE INVENTION

The present invention provides a novel aqueous polymer dispersion by combining an emulsion polymer with a specific surfactant and a specific epoxy silane. A coating composition comprising such aqueous polymer dispersion can show good freeze-thaw stability and satisfactory anti-clogging properties and provide coatings with good hydrophobic stain resistance. These properties may be measured according to the test methods described in the Examples section below.

In a first aspect, the present invention is an aqueous polymer dispersion comprising,

an emulsion polymer,
a surfactant of formula (I),

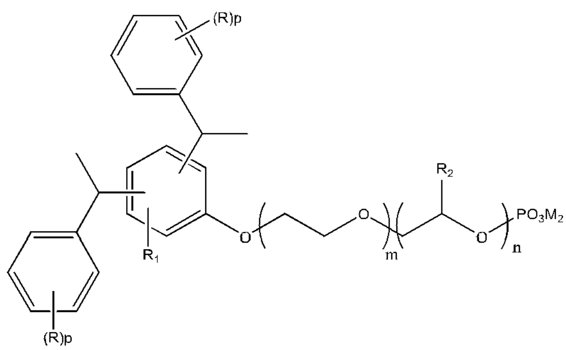

(I),

where each R is independently an alkyl group having from 1 to 4 carbon atoms; $R_1$ is hydrogen or 1-phenethyl-(R)p; $R_2$ is independently methyl or ethyl; m is 1 to 40; n is 0 to 40; p is 0, 1 or 2; and M represents hydrogen, an alkali metal cation, an alkaline earth metal cation, an ammonium residue, or an alkanolamine residue; and
from 0.1% to 1.1%, by weight based on the weight of the emulsion polymer, of an epoxy silane of formula (II):

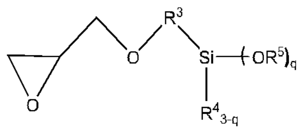

(II),

where $R^3$ represents a bivalent organic group having a molecular weight of 200 or less, $R^4$ represents hydrogen or an alkyl, aryl, or aralkyl group having 1 to 20 carbon atoms, $R^5$ represents an alkyl group having 1 to 6 carbon atoms, and q is 1, 2 or 3.

In a second aspect, the present invention is an aqueous coating composition comprising the aqueous polymer dispersion of the first aspect, and at least one component selected from the group consisting of a dispersant, a coalescent, a wetting agent, a thickener, a defoamer, a pigment, an extender, and mixtures thereof.

## DETAILED DESCRIPTION OF THE INVENTION

"Aqueous" dispersion or composition herein means that particles dispersed in an aqueous medium. By "aqueous medium" herein is meant water and from 0 to 30%, by weight based on the weight of the medium, of water-miscible compound(s) such as, for example, alcohols, glycols, glycol ethers, glycol esters, and the like.

"Acrylic" as used herein includes (meth)acrylic acid, alkyl (meth)acrylate, (meth)acrylamide, (meth)acrylonitrile and their modified forms such as hydroxyalkyl (meth)acrylate. Throughout this document, the word fragment "(meth)acryl" refers to both "methacryl" and "acryl". For example, (meth)acrylic acid refers to both methacrylic acid and acrylic acid, and methyl (meth)acrylate refers to both methyl methacrylate and methyl acrylate.

"Glass transition temperature" or "$T_g$" in the present invention can be measured by various techniques including, for example, differential scanning calorimetry ("DSC") or calculation by using a Fox equation. The particular values of $T_g$ reported herein are those calculated by using the Fox equation (T.G. Fox, Bull. Am. Physics Soc., Volume 1, Issue No. 3, page 123 (1956)). For example, for calculating the Tg of a copolymer of monomers $M_1$ and $M_2$,

$$\frac{1}{T_g(calc.)} = \frac{w(M_1)}{T_g(M_1)} + \frac{w(M_2)}{T_g(M_2)},$$

wherein $T_g(calc.)$ is the glass transition temperature calculated for the copolymer, $w(M_1)$ is the weight fraction of monomer $M_1$ in the copolymer, $w(M_2)$ is the weight fraction of monomer $M_2$ in the copolymer, $T_g(M_1)$ is the glass transition temperature of the homopolymer of monomer $M_1$, and $T_g(M_2)$ is the glass transition temperature of the homopolymer of monomer $M_2$, all temperatures being in K. The glass transition temperatures of the homopolymers may be found, for example, in "Polymer Handbook", edited by J. Brandrup and E.H. Immergut, Interscience Publishers.

"Structural units", also known as "polymerized units", of the named monomer, refers to the remnant of the monomer after polymerization, that is, polymerized monomer or the monomer in polymerized form. For example, a structural unit of methyl methacrylate is as illustrated:

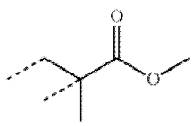

,

where the dotted lines represent the points of attachment of the structural unit to the polymer backbone.

The aqueous polymer dispersion of the present invention may comprise one or more emulsion polymers. The emulsion polymers useful in the present invention may comprise structural units of one or more ethylenically unsaturated functional monomers carrying at least one functional group selected from an amide, ureido, carboxyl, carboxylic anhydride, hydroxyl, sulfonic acid, sulfonate, phosphoric acid, or phosphate group. Examples of suitable ethylenically unsaturated functional monomers include $\alpha$, $\beta$-ethylenically unsaturated carboxylic acids including an acid-bearing monomer such as methacrylic acid, acrylic acid, itaconic acid, maleic acid, or fumaric acid; or a monomer bearing an acid-forming group which yields or is subsequently convertible to, such an acid group such as anhydride, (meth)acrylic anhydride, or maleic anhydride; vinyl phosphonic acid; phosphoalkyl (meth)acrylates such as phosphoethyl (meth)acrylate, phosphopropyl (meth)acrylate, phosphobutyl (meth)acrylate, or salts thereof; 2-acrylamido-2-methyl-1-propanesulfonic acid; sodium salt of 2-acrylamido-2-methyl-1-propanesulfonic acid; ammonium salt of 2-acrylamido-2-methyl-1-propane sulfonic acid; sodium styrene sulfonate; sodium vinyl sulfonate; sodium salt of allyl ether sulfonate; and the like; acrylamide, methacrylamide, monosubstituted (meth)acrylamide, N-methylacrylamide, N-ethylacrylamide, N-isopropylacrylamide, N-butylacrylamide, N-tertiary butylacrylamide, N-2-ethylhexylacrylamide, N,N-dimethylacrylamide, N,N-diethylacrylamide; methylacrylamidoethyl ethylene urea; hydroxy-functional (meth)acrylic acid alkyl ester such as hydroxyethyl methacrylate and hydroxypropyl methacrylate; or mixtures thereof. Preferred ethylenically unsaturated functional monomers are selected from the group consisting of acrylic acid, methacrylic acid, phosphoethyl methacrylate, and mixtures thereof. The emulsion polymer may comprise, by weight based on the dry weight of the emulsion polymer, 0.3% or more, 0.5% or more, or even 1.0% or more, and at the same time, 10% or less, 5.0% or less, or even 3.0% or less of structural units of the ethylenically unsaturated functional monomer.

The emulsion polymer useful in the present invention may further comprise structural units of one or more monoethylenically unsaturated nonionic monomers that are different from the ethylenically unsaturated functional monomers described above. As used herein, the term "nonionic monomers" refers to monomers that do not bear an ionic charge between pH=1-14. Suitable monoethylenically unsaturated nonionic monomers may include, for example, vinyl aromatic monomers, $C_1$-$C_{30}$-alkyl esters of (meth)acrylic acids, (meth)acrylonitrile, acetoacetoxyethyl methacrylate (AAEM), diacetone acrylamide (DAAM), glycidyl (meth)acrylate, or mixtures thereof. Suitable vinyl aromatic monomers may include, for example, styrene, substituted styrene such as methylstyrene, alphamethylstyrene, trans-beta-methylstyrene, 2,4-dimethylstyrene, ethylstyrene, butylstryene, and p-methoxystyrene; o-, m-, and p-methoxystyrene, and p-trifluoromethylstyrene, or mixtures thereof. Suitable $C_1$-$C_{30}$-alkyl esters of (meth)acrylic acids may include $C_1$-$C_{25}$-, $C_1$-$C_{16}$, $C_1$-$C_8$-, $C_1$-$C_4$-, or $C_1$-$C_2$-alkyl esters of (meth)acrylic acid including, for example, ethyl acrylate, 2-ethylhexyl acrylate, methyl (meth)acrylate, butyl (meth)acrylate, tert-butyl (meth)acrylate, iso-butyl (meth)acrylate, decyl (meth)acrylate, isodecyl (meth)acrylate, lauryl (meth)acrylate, icosyl (meth)acrylate, cycloalkyl (meth)acrylates such as cyclohexyl methacrylate and cyclohexyl acrylate, or mixtures thereof. Preferably, the monoethylenically unsaturated nonionic monomers are $C_1$-$C_{30}$-alkyl esters of (meth)acrylic acids such as methyl methacrylate, ethyl acrylate, 2-ethylhexyl acrylate, methyl acrylate, butyl acrylate, lauryl methacrylate, or mixtures thereof. The emulsion polymer may comprise, by weight based on the dry weight of the emulsion polymer, from 85% to 99.7%, from 88% to 98%, from 90% to 96%, or from 92% to 95% of structural units of the monoethylenically unsaturated nonionic monomer.

The emulsion polymer useful in the present invention may optionally comprise structural units of one or more multiethylenically unsaturated monomers including di-, tri-, tetra-, or higher multifunctional ethylenically unsaturated monomers. Suitable multiethylenically unsaturated monomers may include, for example, butadiene, allyl (meth)acrylate, diallyl phthalate, divinyl benzene, ethylene glycol dimethacrylate, butylene glycol dimethacrylate, or mixtures thereof. The emulsion polymer may comprise, by weight based on the dry weight of the emulsion polymer, from zero to 5%, from 0.05% to 1%, or from 0.1% to 0.5% of structural units of the multiethylenically unsaturated monomer.

The types and levels of the monomers described above may be chosen to provide the emulsion polymer with a glass transition temperature (Tg) suitable for different applications. The emulsion polymer may have a Tg of -10°C or higher, -5°C or higher, or even 0°C or higher, and at the same time, 40°C or lower, 30°C or lower, or even 20°C or lower, as calculated by the Fox equation above or measured by DSC.

The aqueous polymer dispersion of the present invention may also comprise one or more surfactant represented by the following formula (I),

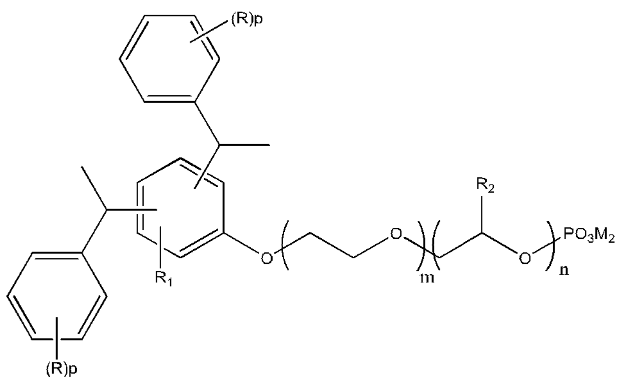

(I),

where each R is independently an alkyl group having 1 to 4 carbon atoms; $R_1$ is hydrogen or 1-phenethyl-(R)p; $R_2$ is independently methyl or ethyl; m is 1 to 40; n is 0 to 40; p is 0, 1 or 2; and M represents hydrogen, an alkali metal cation, an alkaline earth metal cation, an ammonium residue, or an alkanolamine residue.

Each R can be independently methyl, ethyl, propyl, butyl, or combinations thereof.

Preferably, $R_1$ is 1-phenethyl-$(R)_p$, and more preferably, p is 0, $R_1$ is 1-phenethyl.

m represents an average addition mole number of ethylene oxide, m can be an integer of 1 or more, 2 or more, 3 or more, 4 or more, 5 or more, 6 or more, 7 or more, 8 or more, 9 or more, or even 10 or more, and at the same time, 40 or less, 35 or less, 30 or less, 25 or less, or even 20 or less; preferably, from 2 to 20, and more preferably from 5 to 20.

n can be in the range of from 0 to 20, from 0 to 15, or from 0 to 10, preferably n is 0.

Preferably, p is 0.

Preferably, M is $NH_4^+$.

Specific examples of formula (I) include the following structure:

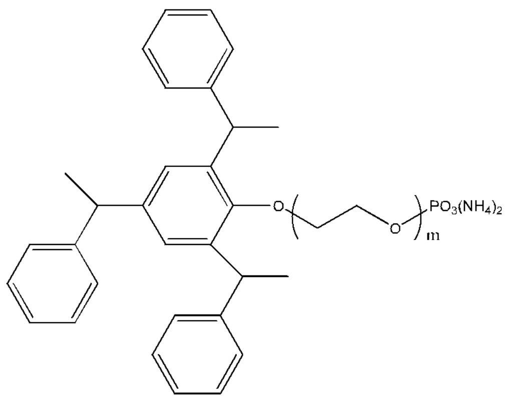

,

where m is defined as formula (I).

Suitable commercially available surfactants include Rhodafac PE3016 surfactant available from Solvay. The surfactant of formula (I) may be present, by weight based on the dry weight of the emulsion polymer, in an amount of 0.5% or more, 0.6% or more, 0.7% or more, 0.75% or more, 0.8% or more, 0.9% or more, 1.0% or more, 1.1% or more, 1.2% or more, 1.3% or more, 1.4% or more, or even 1.5% or more, and at the same time, 5.0% or less, 4.5% or less, 4.0% or less, 3.5% or less, 3.0% or less, 2.8% or less, 2.5% or less, 2.2% or less, or even 2.0% or less.

The aqueous polymer dispersion of the present invention may further comprise one or more epoxy silanes. The epoxy silanes useful in the present invention are typically saturated alkoxylated silanes having an epoxy group. The epoxy silane may have at least one hydrolysable silane group. The epoxy silane may have the general formula (II):

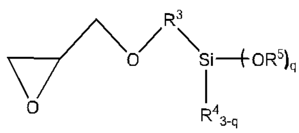

(II),

where $R^3$ represents a bivalent organic group having a molecular weight of 200 or less, preferably, a $C_1$-$C_{10}$, $C_1$-$C_5$, or $C_1$-$C_3$ alkylene group; $R^4$ represents hydrogen or an alkyl, aryl, or aralkyl group having 1 to 20 carbon atoms, preferably a $C_1$-$C_6$ or $C_1$-$C_3$ alkyl group, more preferably, methyl or ethyl; $R^5$ represents an alkyl group having one to 6 carbon atoms, preferably, methyl or ethyl; and q is 1, 2 or 3, preferably, q is 2 or 3. In some embodiments, $R^5$ is methyl or ethyl and q is 2 or 3. Examples of suitable epoxy silanes include 3-glycidyloxypropyl trimethoxysilane, 3-glycidyloxypropyl triethoxysilane, 3-glycidyloxypropyl methyldiethoxysilane, 3-glycidyloxypropyl methyldimethoxysilane, or mixtures thereof. The aqueous dispersion may comprise the epoxy silane, by weight based on the dry weight of the emulsion polymer, in an amount of 0.1% or more, 0.15% or more, 0.2% or more, 0.25% or more, 0.3% or more, 0.35% or more, or even 0.4% or more, and at the same time, 1.1% or less, 1.0% or less, 0.9% or less, 0.8% or less, 0.7% or less, 0.6% or less, or even 0.5% or less.

In some embodiments, the aqueous polymer dispersion of the present invention comprises the emulsion polymer, from 1.0% to 3.0% of the surfactant, and from 0.1% to 0.8% of the epoxy silane, by weight based on the dry weight of the emulsion polymer.

The aqueous polymer dispersion of the present invention may be firstly prepared by emulsion polymerization of the monomers described above to form the emulsion polymer, preferably in the presence of the surfactant of formula (I), and then adding the epoxy silane to the obtained dispersion. A portion of the surfactant of formula (I) can also be added after the polymerization. Total weight concentration of the monomers described above for preparing the emulsion polymer is equal to 100%. The monomers may be added neat or as an emulsion in water; or added in one or more additions or continuously, linearly or nonlinearly, over the reaction period of preparing the emulsion polymer. In addition

to the surfactant of formula (I), one or more additional surfactants that are different from the surfactant of formula (I) may be added prior to, during, or after the polymerization of the monomers, or combinations thereof. Examples of suitable additional surfactants include alkali metal or ammonium salts of alkyl, aryl, or alkylaryl sulfates, sulfonates or phosphates; alkyl sulfonic acids; sulfosuccinate salts; fatty acids; polymerizable surfactants; ethoxylated alcohols or phenols; and mixtures thereof. The additional surfactant should be used in an amount without compromising performance of the aqueous polymer dispersion, for example, from zero to 1.5%, from 0.1% to 1%, from 0.2% to 0.8%, or from 0.3% to 0.6%, by weight based on the dry weight of the emulsion polymer. Temperature suitable for emulsion polymerization process may be lower than 100°C, in the range of from 30 to 95°C, or in the range of from 50 to 90°C.

In the polymerization process of preparing the emulsion polymer, free radical initiators may be used. The polymerization process may be thermally initiated or redox initiated emulsion polymerization. Examples of suitable free radical initiators include hydrogen peroxide, t-butyl hydroperoxide, cumene hydroperoxide, ammonium and/or alkali metal persulfates, sodium perborate, perphosphoric acid, and salts thereof; potassium permanganate, and ammonium or alkali metal salts of peroxydisulfuric acid. The free radical initiators may be used typically at a level of 0.01% to 3.0% by weight, based on the total weight of monomers. Redox systems comprising the above described initiators coupled with a suitable reductant may be used in the polymerization process. Examples of suitable reductants include sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, acetone bisulfite, glycolic acid, hydroxymethanesulfonic acid, glyoxylic acid hydrate, lactic acid, glyceric acid, malic acid, tartaric acid and salts of the proceeding acids. Metal salts of iron, copper, manganese, silver, platinum, vanadium, nickel, chromium, palladium, or cobalt may be used to catalyze the redox reaction. Chelating agents for the metals may optionally be used.

In the polymerization process of preparing the emulsion polymer, a chain transfer agent may be used. Examples of suitable chain transfer agents include 3-mercaptopropionic acid, n-dodecyl mercaptan, methyl 3-mercaptopropionate, butyl 3-mercaptopropionate, benzenethiol, azelaic alkyl mercaptan, or mixtures thereof. The chain transfer agent may be used in an effective amount to control the molecular weight of the emulsion polymer, for example, in an amount of from zero to 1%, from 0.1% to 0.5%, or from 0.15% to 0.4%, by weight based on the weight of the monomers used for preparing the emulsion polymer.

After completing the polymerization of the emulsion polymer, the obtained emulsion polymer may be neutralized by one or more bases as neutralizers to a pH value, for example, at least 6, from 6 to 10, or from 7 to 9. The bases may lead to partial or complete neutralization of the ionic or latently ionic groups of the emulsion polymer. Examples of suitable bases include ammonia; alkali metal or alkaline earth metal compounds such as sodium hydroxide, potassium hydroxide, calcium hydroxide, zinc oxide, magnesium oxide, sodium carbonate; primary, secondary, and tertiary amines, such as triethyl amine, ethylamine, propylamine, monoisopropylamine, monobutylamine, hexylamine, ethanolamine, diethyl amine, dimethyl amine, tributylamine, triethanolamine, dimethoxyethylamine, 2-ethoxyethylamine, 3-ethoxypropylamine, dimethylethanolamine, diisopropanolamine, morpholine, ethylenediamine, 2-diethylaminoethylamine, 2,3-diaminopropane, 1,2-propylenediamine, neopentanediamine, dimethylaminopropylamine, hexamethylenediamine, 4,9-dioxadodecane-1,12-diamine, polyethyleneimine or polyvinylamine; aluminum hydroxide; or mixtures thereof.

The emulsion polymer useful in the present invention may have a particle size of from 50 nanometers (nm) to 500 nm, from 80 nm to 200 nm, or from 90 nm to 150 nm. The particle size herein refers to Z-average size and may be measured by a Brookhaven BI-90 Plus Particle Size Analyzer.

The present invention also relates to an aqueous coating composition comprising the aqueous polymer dispersion of the present invention. The aqueous coating composition may also comprise at least one component selected from the group consisting of a dispersant, a coalescent, a wetting agent, a thickener, a defoamer, a pigment, an extender, and mixtures thereof.

The aqueous coating composition of the present invention may comprise one or more pigments. As used herein, the term "pigment" refers to a particulate inorganic material which is capable of materially contributing to the opacity or hiding capability of a coating. Such materials typically have a refractive index greater than 1.8. Examples of suitable pigments include titanium dioxide ($TiO_2$), zinc oxide, zinc sulfide, iron oxide, barium sulfate, barium carbonate, or mixtures thereof. Preferred pigment used in the present invention is $TiO_2$. $TiO_2$ may be also available in concentrated dispersion form. The aqueous coating composition of the present invention may also comprise one or more extenders. The term "extender" refers to a material having a refractive index of less than or equal to 1.8 and greater than 1.3. Examples of suitable extenders include calcium carbonate, aluminium oxide ($Al_2O_3$), clay, calcium sulfate, aluminosilicate, silicate, zeolite, mica, diatomaceous earth, solid or hollow glass, ceramic bead, and opaque polymers such as ROPAQUE™ Ultra E available from The Dow Chemical Company (ROPAQUE is a trademark of The Dow Chemical Company), or mixtures thereof. The aqueous coating composition of the present invention may have a pigment volume concentration (PVC) of 35% or more, 40% or more, 45% or more, or even 50% or more, and at the same time, 60% or less, 58% or less, or even 55% or less. PVC of a coating composition may be determined according to the following equation:

$$PVC = \frac{\text{volume of pigment(s)} + \text{ volume of extender(s)}}{\text{total dry volume of coating composition}} * 100\%$$

The aqueous coating composition of the present invention may further comprise one or more defoamers. "Defoamers" herein refer to chemical additives that reduce and hinder the formation of foam. Defoamers may be silicone-based defoamers, mineral oil-based defoamers, ethylene oxide/propylene oxide-based defoamers, or mixtures thereof. Suitable commercially available defoamers include, for example, TEGO Airex 902 W and TEGO Foamex 1488 polyether siloxane copolymer emulsions both available from TEGO, BYK-024 silicone deformer available from BYK, or mixtures thereof. The defoamer may be present, by weight based on the total weight of the aqueous coating composition, in an amount of from zero to 0.5%, from 0.05% to 0.4%, or from 0.1% to 0.3%.

The aqueous coating composition of the present invention may further comprise one or more thickeners, also known as "rheology modifiers". The thickeners may include polyvinyl alcohol (PVA), acid derivatives, acid copolymers, urethane associate thickeners (UAT), polyether urea polyurethanes (PEUPU), polyether polyurethanes (PEPU), or mixtures thereof. Examples of suitable thickeners include alkali swellable emulsions (ASE) such as sodium or ammonium neutralized acrylic acid polymers; hydrophobically modified alkali swellable emulsions (HASE) such as hydrophobically modified acrylic acid copolymers; associative thickeners such as hydrophobically modified ethoxylated urethanes (HEUR); and cellulosic thickeners such as methyl cellulose ethers, hydroxymethyl cellulose (HMC), hydroxyethyl cellulose (HEC), hydrophobically-modified hydroxy ethyl cellulose (HMHEC), sodium carboxymethyl cellulose (SCMC), sodium carboxymethyl 2-hydroxyethyl cellulose, 2-hydroxypropyl methyl cellulose, 2-hydroxyethyl methyl cellulose, 2-hydroxybutyl methyl cellulose, 2-hydroxyethyl ethyl cellulose, and 2-hydoxypropyl cellulose. Preferably, the thickener is selected from HASE, HEC, HEUR, or mixtures thereof. The thickener may be present, by weight based on the total weight of the aqueous coating composition, in an amount of from zero to 3.0%, from 0.1% to 1.5%, or from 0.2% to 1.2%.

The aqueous coating composition of the present invention may further comprise one or more wetting agents. "Wetting agents" herein refer to chemical additives that reduce the surface tension of a coating composition, causing the coating composition to more easily spread across or penetrate the surface of a substrate. Wetting agents may be polycarboxylates, anionic, zwitterionic, or non-ionic. Suitable commercially available wetting agents include, for example, TRITON™ CF-10 nonionic surfactant available from The Dow Chemical Company (TRITON is a trademark of The Dow Chemical Company), SURFYNOL 10 nonionic wetting agent based on an actacetylenic diol available from Air Products, BYK-346 and BYK-349 polyether-modified siloxanes both available from BYK, or mixtures thereof. The wetting agent may be present, by weight based on the total weight of the aqueous coating composition, in an amount of from zero to 1.0%, from 0.1% to 0.8%, or from 0.2% to 0.6%.

The aqueous coating composition of the present invention may further comprise one or more coalescents. "Coalescents" herein refer to slow-evaporating solvents that fuse polymer particles into a continuous film under ambient condition. Examples of suitable coalescents include 2-n-butoxyethanol, dipropylene glycol n-butyl ether, propylene glycol n-butyl ether, dipropylene glycol methyl ether, propylene glycol methyl ether, propylene glycol n-propyl ether, diethylene glycol monobutyl ether, ethylene glycol monobutyl ether, ethylene glycol monohexyl ether, triethylene glycol monobutyl ether, dipropylene glycol n-propyl ether, n-butyl ether, or mixtures thereof. Preferred coalescents include Texanol ester alcohol available from Eastman Chemical Company, Coasol and Coasol 290 Plus coalescents available from Chemoxy International Ltd., dipropylene glycol n-butyl ether, ethylene glycol monobutyl ether, diethylene glycol monobutyl ether, n-butyl ether, or mixtures thereof. The coalescent may be present, by weight based on the total weight of the aqueous coating composition, in an amount of from zero to 3.0%, from 0.1% to 2.0%, or from 0.2% to 1.5%.

The aqueous coating composition of the present invention may further comprise one or more dispersants. The dispersants may include non-ionic, anionic or cationic dispersants such as polyacids with suitable molecular weight, 2-amino-2-methyl-1-propanol (AMP), dimethyl amino ethanol (DMAE), potassium tripolyphosphate (KTPP), trisodium polyphosphate (TSPP), citric acid and other carboxylic acids. The polyacids used may include homopolymers and copolymers based on polycarboxylic acids, including those that have been hydrophobically- or hydrophilically-modified, e.g., polyacrylic acid or polymethacrylic acid or maleic anhydride with various monomers such as styrene, acrylate or methacrylate esters, diisobutylene, and other comonomers; salts thereof; or mixtures thereof. The molecular weight of such polyacids may be in the range of from 1,000 to 50,000, from 1,200 to 40,000, from 1,500 to 20,000, from 2,000 to 15,000, or from 2,500 to 10,000, as measured by Gel Permeation Chromatography (GPC) (column: One PLgel GUARD columns (10 μm, 50×7.5 millimeter (mm)) and One Mixed B columns (7.8x300 mm) in tandem; and calibration: PL Polystyrene Narrow standards with molecular weights ranging from 2329000 to 580 g/mol, using polynom 3 fitness). The dispersant may be present, by weight based on the total weight of the aqueous coating composition, in an amount of from zero to 3.0%, from 0.1% to 1.0%, or from 0.2% to 0.6%.

The aqueous coating composition of the present invention may optionally comprise one or more anti-freeze agents. Specific examples of anti-freeze agents include polyoxypropylene polyol, polyethylene glycol, Rhodoline FT-100 freeze thaw stabilizer available from Solvay, or mixtures thereof. The anti-freeze agent may be present in an amount

without compromising hydrophobic stain resistance of coatings made therefrom, for example, less than 3%, less than 2%, less than 1.8%, less than 1.5%, less than 1.2%, less than 1%, less than 0.8%, less than 0.7%, less than 0.6%, less than 0.5%, less than 0.1%, or even zero of the anti-freeze agents, by weight based on the total weight of the aqueous coating composition.

In addition to the components described above, the aqueous coating composition of the present invention may further comprise any one or combination of the following additives: buffers, neutralizers, humectants, mildewcides, biocides, anti-skinning agents, colorants, flowing agents, anti-oxidants, plasticizers, leveling agents, thixotropic agents, adhesion promoters, and grind vehicles. When present, these additives may be present in a combined amount of from zero to 1% or from 0.1% to 0.8%, by weight based on the total weight of the aqueous coating composition.

The aqueous coating composition of the present invention may further comprise water. The concentration of water may be, by weight based on the total weight of the coating composition, from 30% to 90%, from 40% to 80%, or from 50% to 70%.

The aqueous coating composition of the present invention may be prepared by admixing the aqueous polymer dispersion, and optionally, the pigment and other components described above. Components in the aqueous coating composition may be mixed in any order to provide the aqueous coating composition of the present invention. Any of the above-mentioned optional components may also be added to the composition during or prior to the mixing to form the aqueous coating composition. The pigments and/or extenders are preferably mixed with the dispersant to form a slurry of pigments and/or extender.

The aqueous coating composition of the present invention can show good FIT stability and satisfactory anti-clogging properties and also provide coating films obtained therefrom with improved hydrophobic stain resistance (also as "solid stain resistance"). "Good F/T stability" (that is, being freeze-thaw stable) means that a composition can be subjected to three freeze-thaw cycles showing no coagulation and showing a viscosity change in Krebs Units (KU) of 15 or less, 14 or less, 13 or less, 12 or less, or even 11 or less. Improved or good hydrophobic stain resistance used in the present invention refers to a stain removal score for vaseline and carbon black mixture of 9 or higher. The aqueous coating composting can also provide acceptable total stain resistance as indicated by a total stain score of 45 or more, as measured according to GB/T 9780-2013. These properties are measured according to the test methods described in Examples section below

The aqueous coating composition of the present invention may comprise not greater than 5 grams of volatile organic compounds per liter (g/L) of the aqueous coating composition according to the GB 18582-2008 method. Preferably, the VOC content of the aqueous coating composition is less than 3 g/L, less than 2.5 g/L, or even less than 2 g/L.

The aqueous coating composition is suitable for various applications such as interior coatings, marine and protective coatings, automotive coatings, traffic paints, Exterior Insulation and Finish Systems (EIFS), roof mastic, wood coatings, coil coatings, plastic coatings, can coatings, architectural coatings, and civil engineering coatings. The aqueous coating composition is particularly useful for interior coatings.

The present invention also relates to a method of producing a coating on a substrate, comprising: applying the substrate the aqueous coating composition of the present invention, and drying, or allowing to dry the aqueous coating composition to form the coating with improved hydrophobic stain resistance. Drying, or allowing to dry, the applied aqueous coating composition forms a coating. The aqueous coating composition can be applied to, and adhered to, various substrates. Examples of suitable substrates include wood, metals, plastics, foams, stones, elastomeric substrates, glass, wall paper, fabrics, medium-density fiberboard (MDF), particle boards, gypsum boards, concrete, or cementious substrates. The aqueous coating composition can be applied to the substrate by incumbent means including brushing, dipping, rolling and spraying. The aqueous composition is preferably applied by spraying. The standard spray techniques and equipment for spraying such as air-atomized spray, air spray, airless spray, high volume low pressure spray, and electrostatic spray such as electrostatic bell application, and either manual or automatic methods can be used. After the aqueous coating composition has been applied to a substrate, the coating composition can dry, or allow to dry, to form a film (this is, coating) at room temperature (20-25°C), or at an elevated temperature, for example, from 35°C to 60°C. The coating composition can be used alone, or in combination with other coatings to form multi-layer coatings.

## EXAMPLES

Some embodiments of the invention will now be described in the following Examples, wherein all parts and percentages are by weight unless otherwise specified. Monomers, materials, and their abbreviations are as follows,

Methyl methacrylate (MMA), 2-Ethylhexyl acrylate (2-EHA), ethyl acrylate (EA), methacrylic acid (MAA), allyl methacrylate (ALMA), and styrene (ST).

Disponil FES 32 fatty alcohol ether sulfate (31% active) is available from BASF.

Silquest A-171 silane, available from Momentive Performance Materials Inc., is a vinyl trimethoxy silane.

Rhodafac RS-610A25 surfactant (25% active), available from Solvay, is polyethylene glycol monotridecyl ether phosphate.

Rhodafac PE3016 surfactant (PE3016) (30% active), available from Solvay, is tristyrylphenol polyethylene glycol ether phosphate.

PP-7025 (25% active), available from Shanghai Yuyou Industrial Co., Ltd., is Poly[oxy(methyl-1,2-ethanediyl)], .alpha.-2-propenyl-, omega,-hydroxy, -phosphate.

Coatosil 2287 silane, available from Momentive Performance Materials Inc., is 3-glycidyloxypropyl methyldiethoxysilane.

Silquest A-187 silane, available from Momentive Performance Materials Inc., is 3-glycidyloxypropyl trimethoxysilane.

CoatOSil MP 200 epoxy functional silane oligomer, available from Momentive Performance Materials Inc., is an epoxy-containing polysiloxane oligomer with the structure as below,

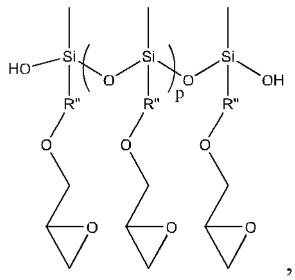

,

where p=0~10, and R" is $-CH_2CH_2CH_2-$.

The following standard analytical equipment and methods are used in the Examples.

VOC test method

VOCs were measured according to GB18582-2008 national standard (Indoor decorating and refurbishing materials-Limit of harmful substances of interior architectural coatings), where acetonitrile as a solvent and mass spectrometer detector were used.

Freeze/Thaw (FIT) Stability Evaluation

After a test coating composition was prepared, the coating composition sample was equilibrated at room temperature overnight and then the KU viscosity of the coating composition was measured and recorded as "Initial KU". Then a container was filled with 75% volume of the test coating composition. The container was sealed and placed into a freezer at -6°C for 16 hours, and then taken out from the freezer to allow to thaw at ambient conditions (about 25°C) for 8 hours. The above steps complete one F/T cycle. The F/T cycles were continued until the sample coagulated or to a maximum of three cycles. After each cycle, the cycle number was recorded if coagulation or gel had been observed. After the completion of 3 cycles, the container was shaken manually to observe the appearance of the sample by the naked eye. After further equilibrated for 3-5 hours at room temperature, the KU viscosity of the ample was measured and recorded as "Final KU". If the sample does not coagulate or shows no grit separated from the sample after the freeze-thaw test and shows a viscosity change (ΔKU) of 15 or less (i.e., ΔKU= Final KU - Initial KU), the sample has good freeze-thaw stability. Otherwise, if the sample coagulates or has grits separated, or shows a viscosity change > 15 KU, the sample has poor freeze-thaw stability. "KU viscosity" represents the mid-shear viscosity measured by Brookfield KU-1+ Stormer viscometer, with KU as the Kerbs unit.

Brush Clogging Test

A test sample was prepared by mixing a test coating composition (100 g) and water (20 g). The resultant mixture was poured into a can. Next, a woolen brush was placed into the can which was then put in an oven at 40°C for 2 hours. The heated brush was taken out and brushed on a board, and then was placed back into the can which was stored in the oven. The above steps complete one cycle. At every cycle, the cycle number is recorded if brush clogging has been observed. After completion of 5 cycles, the brush was gently washed by hand using water. If the brush is not clogged or hardened and there is no precipitation observed inside the brush, the sample passes the brush clogging test (satisfactory anti-clogging property); otherwise, the sample fails the brush clogging test (unsatisfactory anti-clogging property).

Stain Resistance test

Stain resistance was evaluated according to GB/T 9780-2013 (Test method for dirt pickup resistance and stain removal of film of architectural coatings and paint). Test samples were casted on black vinyl scrub charts using a drawdown bar to form wet films (thickness: 120 μm). The films were cured for 7 days at room temperature before stains were applied. Test areas consist of 25 mm wide and 100 mm length of the chart cross section. Within the test area, six types of stains (vinegar, black tea, blue black ink, water-soluble nigrosine solution, alcohol-soluble nigrosine solution, and vaseline and carbon black mixture) were applied on the films, respectively. Liquid stains were applied over gauze to prevent the stain from running off from the test area. Stains stayed on the panel for 2 hours before excess stain was wiped off with dry tissue. The obtained test panel was then placed on a scrub tester under a 1.5 kilograms (kg) weight, with a scrubbing cycle of 37 scrubs per minute. After the test panel was scrubbed for 200 cycles, it was removed from the tester, rinsed under running water, and hung up to dry. Then the test stain area was evaluated by determining the change of reflection index (X) using the formula below,

$$X = \frac{Y_1}{Y_0} \times 100$$

where $Y_1$ is reflection index after the stain removal test and $Y_0$ is reflection index before the stain removal test. $Y_1$ and $Y_0$ were tested by BYK spectro-guide instrument.

Based on the obtained reflection index value X, the stain removal score (Ri) for each stain, on a scale of 1 to 10, can be obtained from the below table,

| | Reflection index of each stain | | | | | |
|---|---|---|---|---|---|---|
| *Ri* | Vinegar | Black tea | Blue black Ink | Water soluble nigrosine solution | Alcohol soluble nigrosine solution | Vaseline and carbon black mixture |
| 10 | 99<X ≤100 | 98<X ≤100 | 96<X ≤100 | 96<X ≤100 | 95<X ≤100 | 99<X ≤100 |
| 9 | 98<X ≤99 | 95<X ≤98 | 91<X ≤96 | 91<X ≤96 | 89<X ≤95 | 98<X ≤99 |
| 8 | 97<X ≤98 | 91<X ≤95 | 85<X ≤91 | 85<X ≤91 | 82<X ≤89 | 97<X ≤98 |
| 7 | 96<X ≤97 | 86<X ≤91 | 78<X ≤85 | 78<X ≤85 | 74<X ≤82 | 96<X ≤97 |
| 6 | 95<X ≤96 | 80<X ≤86 | 70<X ≤78 | 70<X ≤78 | 65<X ≤74 | 95<X ≤96 |
| 5 | 93<X ≤95 | 73<X ≤80 | 61<X ≤70 | 61<X ≤70 | 55<X ≤65 | 93<X ≤95 |
| 4 | 90<X ≤93 | 65<X ≤73 | 51<X ≤61 | 51<X ≤61 | 44<X ≤55 | 90<X ≤93 |
| 3 | 86<X ≤90 | 56<X ≤65 | 40<X ≤51 | 40<X ≤51 | 32<X ≤44 | 86<X ≤90 |
| 2 | 81<X ≤86 | 46<X ≤56 | 28<X ≤40 | 28<X ≤40 | 19<X ≤32 | 81<X ≤86 |
| 1 | X ≤81 | X ≤46 | X ≤28 | X ≤28 | X ≤19 | X ≤81 |

The total stain removal score (R') was then calculated according to the formula below,

$$R' = \frac{\sum_{i=1}^{n=6} R_i}{n} \times 10 .$$

where *Ri* is the stain removal score for different stains and n is 6.

The total stain removal score of 45 points or higher is acceptable (i.e., good total stain resistance). The stain removal score for vaseline and carbon black mixture of 9 points or higher indicates good hydrophobic stain resistance.

Example (Ex) 1

A monomer emulsion (ME) was prepared by mixing DI water (450 g), PE3016 surfactant (92.56 g, 30% active), MMA (656.51 g), 2-EHA (111.07 g), EA (721.21 g), and MAA (23.76 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) dissolved in DI water (28.08 g). The remaining ME was added into the flask while co-feeding sodium persulfate (1.56 g) in DI water (100 g) in 120 min. When the ME feed was completed, a catalyst/activator feed of tert-Butyl hydroperoxide (t-BHP) (1.53 g, 70% aqueous solution) and iso-ascorbic acid (IAA) (0.47 g) was added, and then another catalyst/activator feed of t-BHP (8.03 g, 70% active) and IAA (2.72 g) was added to the flask in 40 minutes (min) to chase the residual monomer separately. Then NaOH solution was added to adjust the pH to 8.0-8.5. At last, Silquest A-187 silane (8.20 g) was post added slowly.

Ex 2

A monomer emulsion (ME) was prepared by mixing DI water (450 g), PE3016 surfactant (92.56 g, 30% active), MMA (656.51 g), 2-EHA (111.07 g), EA (721.21 g), and MAA (23.76 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) in DI water (28.08 g). The remaining ME was added into the flask while co-feeding sodium persulfate (1.56 g) in DI water (100 g) in 120 minutes. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the residual monomer separately. Then NaOH solution was added to adjust the pH to 8.0-8.5. At last, Coatosil 2287 silane (8.20 g) was post added slowly.

Ex 3

A monomer emulsion (ME) was prepared by mixing DI water (450 g), PE3016 surfactant (92.56 g, 30% active), MMA (656.51 g), 2-EHA (111.07 g), EA (721.21 g), and MAA (23.76 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) in DI water (28.08 g). The remaining ME was added into the flask while co-feeding sodium persulfate (1.56 g) in DI water (100 g) in 120 min. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the residual monomer separately. Then NaOH solution was added to adjust the pH to 8.0-8.5. At last, Silquest A-187 silane (4.92 g) was post added slowly.

Ex 4

A monomer emulsion (ME) was prepared by mixing DI water (450 g), PE3016 surfactant (92.56 g, 30% active), MMA (656.51 g), 2-EHA (111.07 g), EA (721.21 g), and MAA (23.76 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) dissolved in DI water (28.08 g). The remaining ME was added into the flask while co-feeding sodium persulfate (1.56 g) in DI water (100 g) in 120 min. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the

residual monomer separately. Then NaOH solution was added to adjust the pH to 8.0-8.5. At last, Silquest A-187 silane (13.12 g) was post added slowly.

Comparative (Comp) Ex 1

A monomer emulsion (ME) was prepared by mixing DI water (450 g), RS-610A25 surfactant (100 g, 25% active), MMA (656.51 g), 2-EHA (111.07 g), EA (721.21 g), and MAA (23.76 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) in DI water (28.08 g). The remaining ME was added into the flask while co-feeding sodium persulfate (1.56 g) in DI water (100 g) in 120 min. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the residual monomer separately. Then NaOH solution was added to adjust the pH to 8.0-8.5. At last, Silquest A-187 silane (8.20 g) was post added slowly.

Comp Ex 2

A monomer emulsion (ME) was prepared by mixing DI water (450 g), PE3016 surfactant (92.56 g, 30% active), MMA (656.51 g), 2-EHA (111.07 g), EA (721.21 g), and MAA (23.76 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) in DI water (28.08 g). The remaining ME was added into the flask while co-feeding sodium persulfate (1.56 g) in DI water (100 g) in 120 min. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the residual monomer separately. Then NaOH solution was added to adjust the pH to 8.0-8.5. At last, CoatOSil MP 200 silane oligomer (8.20 g) was post added slowly.

Comp Ex 3

A monomer emulsion (ME) was prepared by mixing DI water (450 g), PE3016 surfactant (92.56 g, 30% active), MMA (648.31 g), 2-EHA (111.07 g), EA (721.21 g), MAA (23.76 g), and A-171 silane (8.20 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) in DI water (28.08 g). The remaining ME was added into the flask while co-feeding sodium persulfate (1.56 g) in DI water (100 g) in 120 min. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the residual monomer separately. Then NaOH solution was added to adjust the pH to 8.0-8.5.

Comp Ex 4

A monomer emulsion (ME) was prepared by mixing DI water (450 g), PE3016 surfactant (92.56 g, 30% active), MMA (656.51 g), 2-EHA (111.07 g), EA (721.21 g), and MAA (23.76 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) in DI water (28.08 g). The remaining ME was added into the flask while co-feeding sodium persulfate (1.56 g) in DI water (100 g) in 120 min. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the residual monomer separately. Then NaOH solution was added to adjust the pH to 8.0-8.5.

Comp Ex 5

A monomer emulsion (ME) was prepared by mixing DI water (450 g), PE3016 surfactant (92.56 g, 30% active), MMA (656.51 g), 2-EHA (111.07 g), EA (721.21 g), and MAA (23.76 g). In a 5-liter, four necked round bottom flask equipped with a paddle stirrer, a thermometer, a nitrogen inlet and a reflux condenser, DI water (700 g) was added and

heated to 88°C under nitrogen atmosphere with stirring. FES 32 (5.0 g, 31% active) and ME (59.6 g) were then added into the flask, quickly followed by sodium persulfate (4.68 g) in DI water (28.08 g). The remaining ME was added into the flask while co-feeding sodium persulfate (1.56 g) in DI water (100 g) in 120 min. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the residual monomer separately. Then NaOH solution was added to adjust the pH to 8.0-8.5. At last, Silquest A-187 silane (19.68 g) was post added slowly.

Comp Ex 6

A monomer emulsion (ME) was prepared by mixing DI water (450 g), RS-610A25 surfactant (50.00 g, 25% active), PP-7025 (60.00 g, 25% active), MMA (719.46 g), 2-EHA (109.42 g), EA (721.21 g), and MAA (16.97 g). In a 5-liter, four necked round bottom flask equipped with a paddle stirrer, a thermometer, a nitrogen inlet and a reflux condenser, DI water (700 g) was added and heated to 88°C under nitrogen atmosphere with stirring. FES 32 (5.0 g, 31% active) and ME (59.6 g) were then added into the flask, quickly followed by sodium persulfate (4.68 g) dissolved in DI water (28.08 g). The remaining ME was added into the flask while co-feeding sodium persulfate (1.56 g) in DI water (100 g) in 120 min. When the ME feed was completed, a catalyst/activator feed of t-BHP (1.53 g, 70% active) and IAA (0.47 g) was added, and then another catalyst/activator feed of t-BHP (8.03 g, 70% active) and IAA (2.72 g) was added to the flask in 40 min to chase the residual monomer separately. Then NaOH solution was added to adjust the pH to 8.0-8.5. At last, CoatOSil MP 200 silane oligomer (8.20 g) was post added slowly.

All the above obtained aqueous polymer dispersions had a Tg of 25°C as determined by the DSC test method described above. Other properties of these aqueous polymer dispersions are given in Table 1. These aqueous polymer dispersions were used as binders in preparing coating compositions below.

Table 1 Properties of aqueous polymer dispersions

| Sample | Solids content[1] (%) | Particle size[2] (nm) |
|---|---|---|
| Ex 1 | 47.24 | 145 |
| Ex 2 | 47.62 | 149 |
| Ex 3 | 47.62 | 149 |
| Ex 4 | 47.62 | 149 |
| Comp Ex 1 | 47.50 | 140 |
| Comp Ex 2 | 47.60 | 142 |
| Comp Ex 3 | 47.65 | 142 |
| Comp Ex 4 | 46.85 | 138 |
| Comp Ex 5 | 47.62 | 149 |
| Comp Ex 6 | 47.50 | 148 |

*[1]Solids content was measured by weighting 0.7±0.1 g of an aqueous polymer dispersion sample (wet weight of the sample is denoted as "W1"), putting the sample into an aluminum pan (weight of aluminum pan is denoted as "W2") in an oven at 150°C for 25 min, and then cooling and weighting the aluminum pan with the dried sample with total weight denoted as "W3". Solids content is calculated by (W3-W2)/W1*100%; [2]Particle size was measured by a Brookhaven BI-90 Plus Particle Size Analyzer and reported as Z-average size.*

Coating Compositions

Coating compositions of Coatings 1-4 and Comp Coatings 1-6 were prepared based on formulations listed in Table 2. Ingredients for grind were mixed using a high speed Cowles disperser at a speed of 800-1000 revolutions per minute (rpm). Then ingredients for the letdown stage were added and mixed by a conventional agitator at a speed of 500-800 rpm. The as prepared binder (aqueous polymer dispersion) used for preparing each coating composition is given in Table 3.

Table 2. Coating Compositions

| *Grind* | Supplier | gram |
|---|---|---|
| Water | | 145.64 |
| NATROSOL 250 HBR hydroxyethyl cellulose | Ashland Company | 2.00 |
| Sodium Hydroxide (15%) | | 1.50 |
| TAMOL™ 1288 dispersant | The Dow Chemical Company | 6.00 |
| Rhodoline FT-100 anti-freezer | Solvay | 6.00 |
| Nopco NXZ defoamer | San Nopco Ltd. | 3.00 |
| DB-80 calcined kaolin | Inner Mongolia Super Building Material Technology Co., Ltd. | 80.00 |
| ASP 170 washed kaolin | Inner Mongolia Super Building Material Technology Co., Ltd | 60.00 |
| CC-700 calcium carbonate | Guangfu Building Materials Group | 60.00 |
| Celite 499 diatomite | IRI New Materials Co., Ltd. | 10.00 |
| Ti-Pure R-706 titanium dioxide | Chemours Co., Ltd. | 220.00 |
| Kathon LXE | The Dow Chemical Company | 1.00 |
| *Grind Sub-total* | | 595.14 |
| ***LetDown*** | | |
| Binder | | 330.00 |
| ROPAQUE Ultra E opaque polymer | The Dow Chemical Company | 40.00 |
| Coasol 290 Plus coalescent | Chemoxy International Ltd. | 23.86 |
| Water | | 8.00 |
| ACRYSOL™ RM-8W rheology modifier | The Dow Chemical Company | 3.00 |
| *Total* | | 1000.00 |
| **TAMOL and ACRYSOL are trademarks of The Dow Chemical Company.* | | |

The above obtained coating compositions with 53% PVC and 42.8% VS (volume solids) were tested for anti-clogging properties, FIT stability, and stain resistance, according to the test methods described above and results are given in Table 3. As shown in Table 3, all the comparative coating compositions failed at least one of anti-clogging, FIT stability, and hydrophobic stain resistance properties. The coating composition made from the aqueous dispersion of Comp Ex 1 comprising RS-610A25 surfactant and Silquest A-187 silane failed the brush clogging test and provided coatings with poor hydrophobic stain resistance and total stain resistance. The coating composition made from the aqueous polymer dispersion of Comp Ex 2 comprising PE-3016 surfactant and MP 200 silane oligomer showed poor F/T stability. The coating composition comprising the emulsion polymer prepared with A-171 silane showed poor FIT stability (Comp Coating 3). The binder comprising PE3016 surfactant without the specific epoxy silane provided coating films with poor hydrophobic stain resistance and poor total stain resistance (Comp Coating 4). The coating composition comprising 1.2% Silquest A-187 silane (by weight based on the weight of the emulsion polymer) showed poor FIT stability (Comp Coating 5). The coating composition comprising the aqueous dispersion of Comp Ex 6 comprising RS-610A25 surfactant and MP 200 silane oligomer showed poor F/T stability and provided coatings with poor hydrophobic stain resistance (~8).

In contrast, the coating compositions of Coatings 1-4 comprising inventive binders containing a specific amount of epoxy silanes, a specific phosphate surfactant (e.g., PE3016 surfactant) in combination with emulsion polymers showed good FIT stability and satisfactory anti-clogging properties and provided coating films with good hydrophobic stain resistance. It is believed that the above combination for inventive binders showed synergetic effects on the improvement of hydrophobic stain resistance without compromising FIT stability and anti-clogging properties.

Table 3. Coating compositions and properties of coatings

| Coating composition | Aqueous polymer dispersion (binder) | Brush clogging test | ΔKU | F/T stability | Stain score for vaseline/carbon black mixture | Total stain score | VOCs (ppm) |
|---|---|---|---|---|---|---|---|
| Coating 1 | Ex 1 | pass | 10.3 | good | 10 | 48 | 470 |
| Coating 2 | Ex 2 | pass | 13.7 | good | 9 | 46 | 527 |
| Coating 3 | Ex 3 | pass | 12.5 | good | 9 | 48 | 500 |
| Coating 4 | Ex 4 | pass | 14.5 | good | 9 | 51 | 515 |
| Comp Coating 1 | Comp Ex 1 | fail | 7.5 | good | 5 | 43 | 582 |
| Comp Coating 2 | Comp Ex 2 | pass | 17.1 | poor | 9 | 48 | 618 |
| Comp Coating 3 | Comp Ex 3 | pass | 19.9 | poor | 9 | 48 | NA |
| Comp Coating 4 | Comp Ex 4 | pass | 4.3 | good | 4 | 42 | NA |
| Comp Coating 5 | Comp Ex 5 | pass | 17.0 | poor | 9 | 53 | NA |
| Comp Coating 6 | Comp Ex 6 | pass | >20 | poor | 8 | 63 | NA |

## Claims

**1.** An aqueous polymer dispersion comprising,

an emulsion polymer,
a surfactant of formula (I),

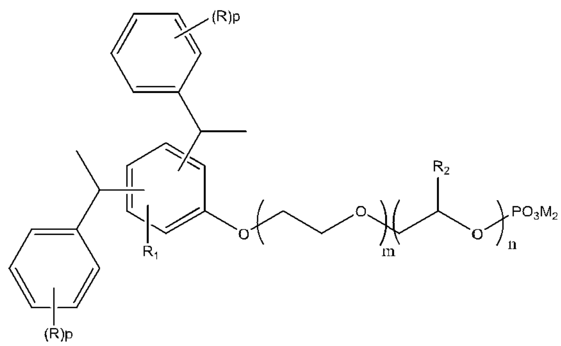

(I),

where each R is independently an alkyl group having from 1 to 4 carbon atoms; $R_1$ is hydrogen or 1-phenethyl-(R)p; $R_2$ is independently methyl or ethyl; m is 1 to 40; n is 0 to 40; p is 0, 1 or 2; and M represents hydrogen, an alkali metal cation, an alkaline earth metal cation, an ammonium residue, or an alkanolamine residue; and from 0.1% to 1.1%, by weight based on the dry weight of the emulsion polymer, of an epoxy silane of formula (II):

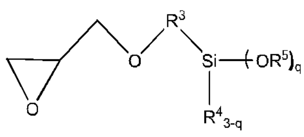

(II),

where $R^3$ represents a bivalent organic group having a molecular weight of 200 or less, $R^4$ represents hydrogen or an alkyl, aryl, or aralkyl group having 1 to 20 carbon atoms, $R^5$ represents an alkyl group having 1 to 6 carbon atoms, and q is 1, 2 or 3.

**2.** The aqueous polymer dispersion of claim 1, wherein the surfactant of formula (I) comprises the following structure,

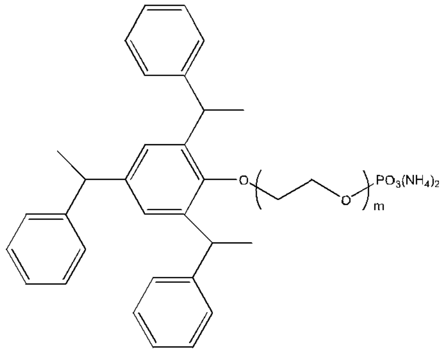

.

**3.** The aqueous polymer dispersion of claim 1, comprising from 0.5% to 5.0% of the surfactant, by weight based on the dry weight of the emulsion polymer.

**4.** The aqueous polymer dispersion of claim 1, wherein, in formula (II), $R^5$ is methyl or ethyl, and q is 2 or 3.

**5.** The aqueous polymer dispersion of claim 1, wherein the epoxy silane is selected from the group consisting of 3-glycidyloxypropyl trimethoxysilane, 3-glycidyloxypropyl triethoxysilane, 3-glycidyloxypropyl methyldiethoxysilane, 3-glycidyloxypropyl methyldimethoxysilane, and mixtures thereof.

**6.** The aqueous polymer dispersion of claim 1, comprising the emulsion polymer, from 1.0% to 3.0% of the surfactant, and from 0.1% to 0.8% of the epoxy silane, by weight based on the dry weight of the emulsion polymer.

**7.** The aqueous polymer dispersion of claim 1, wherein the emulsion polymer comprises structural units of an ethylenically unsaturated functional monomer carrying at least one functional group selected from an amide, ureido, carboxyl, carboxylic anhydride, hydroxyl, sulfonic acid, sulfonate, phosphoric acid, or phosphate group; and structural units of a monoethylenically unsaturated nonionic monomer.

**8.** An aqueous coating composition comprising the aqueous polymer dispersion of any one of claims 1-7, and at least one component selected from the group consisting of a dispersant, a coalescent, a wetting agent, a thickener, a defoamer, a pigment, an extender, and mixtures thereof.

## Patentansprüche

**1.** Wässrige Polymerdispersion, umfassend ein Emulsionspolymer,

ein Tensid der Formel (I),

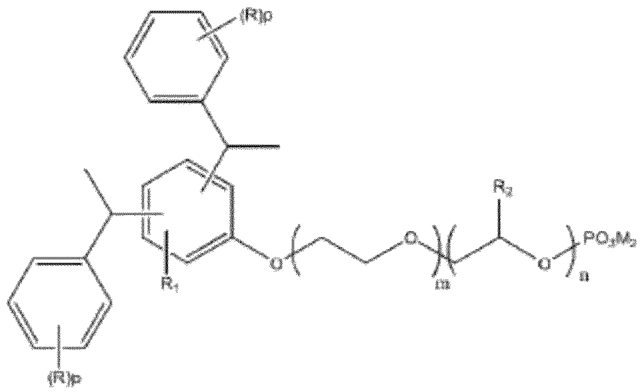

(I),

wobei jedes R unabhängig eine Alkylgruppe ist, die 1 bis 4 Kohlenstoffatome aufweist; $R_1$ Wasserstoff oder 1-Phenethyl-(R)p ist; $R_2$ unabhängig Methyl oder Ethyl ist; m 1 bis 40 ist; n 0 bis 40 ist; p 0, 1 oder 2 ist; und M für Wasserstoff, ein Alkalimetallkation, ein Erdalkalimetallkation, einen Ammoniumrest oder einen Alkanolaminrest steht; und

zu 0,1 Gew.-% bis 1,1 Gew.-%, bezogen auf das Trockengewicht des Emulsionspolymers, ein Epoxysilan der Formel (II):

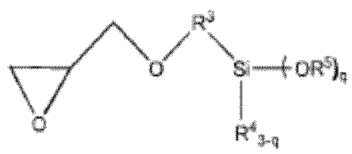

(II),

wobei $R^3$ für eine zweiwertige organische Gruppe, die ein Molekulargewicht von 200 oder weniger aufweist, steht, $R^4$ für Wasserstoff oder eine Alkyl-, Aryl- oder Aralkylgruppe, die 1 bis 20 Kohlenstoffatome aufweist, steht, $R^5$ für eine Alkylgruppe, die 1 bis 6 Kohlenstoffatome aufweist, steht und q 1, 2 oder 3 ist.

**2.** Wässrige Polymerdispersion nach Anspruch 1, wobei das Tensid der Formel (I) die folgende Struktur umfasst,

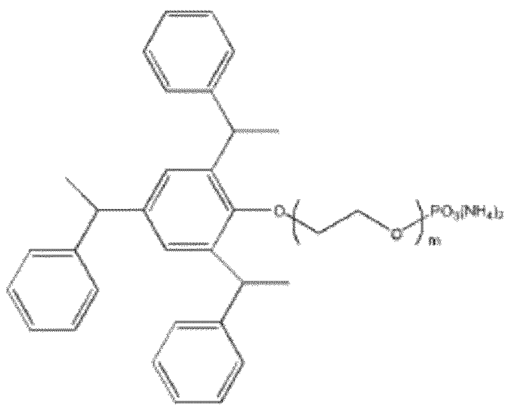

**3.** Wässrige Polymerdispersion nach Anspruch 1, umfassend zu 0,5 Gew.-% bis 5,0 Gew.-% das Tensid, bezogen auf das Trockengewicht des Emulsionspolymers.

**4.** Wässrige Polymerdispersion nach Anspruch 1, wobei in Formel (II) $R^5$ Methyl oder Ethyl ist und q 2 oder 3 ist.

**5.** Wässrige Polymerzusammensetzung nach Anspruch 1, wobei das Epoxysilan ausgewählt ist aus der Gruppe bestehend aus 3-Glycidyloxypropyltrimethoxysilan, 3-Glycidyloxypropyltriethoxysilan, 3-Glycidyloxypropylmethyldiethoxysilan, 3-Glycidyloxypropylmethyldimethoxysilan und Mischungen davon.

**6.** Wässrige Polymerdispersion nach Anspruch 1, umfassend das Emulsionspolymer, zu 1,0 Gew.-% bis 3,0 Gew.-%

das Tensid und zu 0,1 Gew.-% bis 0,8 Gew.-% das Epoxysilan, bezogen auf das Trockengewicht des Emulsionspolymers.

**7.** Wässrige Polymerdispersion nach Anspruch 1, wobei das Emulsionspolymer Struktureinheiten eines ethylenisch ungesättigten funktionellen Monomers, das mindestens eine funktionelle Gruppe trägt, die aus einer Amid-, Ureido-, Carboxyl-, Carbonsäureanhydrid-, Hydroxyl-, Sulfonsäure-, Sulfonat-, Phosphorsäure- oder Phosphatgruppe ausgewählt ist; und Struktureinheiten eines monoethylenisch ungesättigten nichtionischen Monomers umfasst.

**8.** Wässrige Beschichtungszusammensetzung, umfassend die wässrige Polymerdispersion nach einem der Ansprüche 1 bis 7 und mindestens eine Komponente, die ausgewählt ist aus der Gruppe bestehend aus einem Dispergiermittel, einem Koaleszenzmittel, einem Benetzungsmittel, einem Verdickungsmittel, einem Entschäumer, einem Pigment, einem Streckmittel und Mischungen davon.

## Revendications

**1.** Dispersion aqueuse de polymère comprenant, un polymère en émulsion,

un agent tensioactif de formule (I),

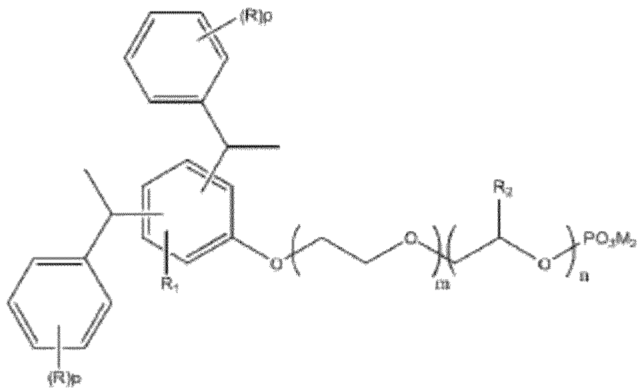

(I),

dans laquelle chaque R est indépendamment un groupe alkyle ayant de 1 à 4 atomes de carbone ; $R_1$ est hydrogène ou 1-phénéthyl-(R)p ; $R_2$ est indépendamment méthyle ou éthyle ; m va de 1 à 40 ; n va de 0 à 40 ; p vaut 0, 1 ou 2 ; et M représente hydrogène, un cation de métal alcalin, un cation de métal alcalino-terreux, un résidu d'ammonium, ou un résidu d'alcanolamine ; et

de 0,1 % à 1,1 %, en poids sur la base du poids sec du polymère en émulsion, d'un époxy silane de formule (II) :

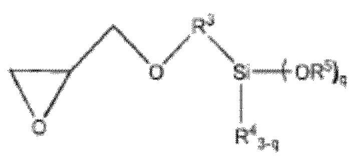

(II),

où $R^3$ représente un groupe organique bivalent ayant une masse moléculaire de 200 ou moins, $R^4$ représente hydrogène ou un groupe alkyle, aryle, ou aralkyle ayant 1 à 20 atomes de carbone, $R^5$ représente un groupe alkyle ayant 1 à 6 atomes de carbone, et q vaut 1, 2 ou 3.

**2.** Dispersion aqueuse de polymère selon la revendication 1, dans laquelle l'agent tensioactif de formule (I) comprend la structure suivante,

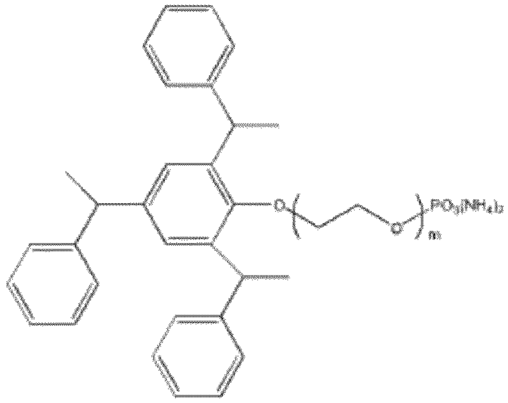

3. Dispersion aqueuse de polymère selon la revendication 1, comprenant de 0,5 % à 5,0 % de l'agent tensioactif, en poids sur la base du poids sec du polymère en émulsion.

4. Dispersion aqueuse de polymère selon la revendication 1, dans laquelle, dans la formule (II), $R^5$ est méthyle ou éthyle, et q vaut 2 ou 3.

5. Composition aqueuse de polymère selon la revendication 1, dans laquelle l'époxy silane est choisi dans le groupe constitué du 3-glycidyloxypropyl triméthoxysilane, du 3-glycidyloxypropyl triéthoxysilane, du 3-glycidyloxypropyl méthyldiéthoxysilane, du 3-glycidyloxypropyl méthyldiméthoxysilane, et de mélanges de ceux-ci.

6. Dispersion aqueuse de polymère selon la revendication 1, comprenant le polymère en émulsion, de 1,0 % à 3,0 % de l'agent tensioactif, et de 0,1 % à 0,8 % de l'époxy silane, en poids sur la base du poids sec du polymère en émulsion.

7. Dispersion aqueuse de polymère selon la revendication 1, dans laquelle le polymère en émulsion comprend des motifs structuraux d'un monomère fonctionnel à insaturation éthylénique portant au moins un groupe fonctionnel choisi parmi un groupe amide, uréido, carboxyle, anhydride carboxylique, hydroxyle, acide sulfonique, sulfonate, acide phosphorique, ou phosphate ; et des motifs structuraux d'un monomère non ionique à insaturation monoéthylénique.

8. Composition aqueuse de revêtement comprenant la dispersion aqueuse de polymère selon l'une quelconque des revendications 1 à 7, et au moins un composant choisi dans le groupe constitué d'un dispersant, d'un agent de coalescence, d'un agent mouillant, d'un épaississant, d'un agent antimousse, d'un pigment, d'un diluant, et de mélanges de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 97802013 T


### Non-patent literature cited in the description


- **T.G. FOX.** *Bull. Am. Physics Soc.,* 1956, vol. 1 (3), 123
- **J. BRANDRUP ; E.H. IMMERGUT.** Polymer Handbook. Interscience Publishers